# EUROPEAN PATENT SPECIFICATION

(11) **EP 1 609 969 B1**
(45) Date of publication and mention of the grant of the patent: **12.10.2011**
(21) Application number: 04721697.3
(22) Date of filing: 18.03.2004
(51) Int. Cl.: F02D 9/10, F02D 41/00, F02M 35/10

(54) **STRUCTURE OF PROVIDING ELECTRONIC CONTROL DEVICE FOR MOTOR VEHICLE AND STRUCTURE OF ATTACHING HEAT-GENERATING COMPONENT OF THROTTLE BODY**
STRUKTUR ZUR BEREITSTELLUNG EINER ELEKTRONISCHEN STEUERVORRICHTUNG FÜR EIN KRAFTFAHRZEUG UND STRUKTUR ZUR BEFESTIGUNG EINER WÄRME ERZEUGENDEN DROSSELKÖRPERKOMPONENTE
STRUCTURE FORMANT UN DISPOSITIF DE COMMANDE ELECTRONIQUE POUR VEHICULES A MOTEUR ET STRUCTURE FIXANT UN ELEMENT GENERATEUR DE CHALEUR DU BOITIER PAPILLON

(30) Priority: 20.03.2003 JP 2003078537; 20.03.2003 JP 2003078542
(43) Date of publication of application: 28.12.2005
(73) Proprietor: Keihin Corporation, Tokyo 163-0539 (JP)
(72) Inventor: NAKAGAWA, Mitsuyuki, c/o Keihin Corporation, Kawasaki-shi, Kanagawa 211-8580 (JP); CHIDA, Toshiaki, c/o Keihin Corporation Tochigi Research & Development Center,, -machi, Shioya-gun, Tochigi 329-1233 (JP); CHIDA, Satoshi, c/o Keihin Corporation Tochigi Research & Development Center,, -machi, Shioya-gun, Tochigi 329-1233 (JP)
(74) Representative: Fritsche, Rainer
(86) International application number: PCT/JP2004/003673
(87) International publication number: WO 2004/083617

(56) References cited:
- EP-A- 1 281 848
- DE-A1- 10 051 912
- DE-A1- 19 814 679
- JP-A- 10 281 026
- JP-A- 2002 285 866
- JP-A- 2002 295 282
- JP-A- 2003 074 379
- US-A1- 2002 179 025

## Description

### TECHNICAL FIELD

The present invention relates to a mounting structure for an electronic control device for a vehicle. Moreover, the present invention relates to a mounting structure for a heat-generating component of a throttle body having a throttle valve.

The basic applications of the present application are Japanese Patent Application No. 2003-78537 and Japanese Patent Application No. 2003-78542, the contents of which are incorporated herein by reference.

### BACKGROUND ART

As a technique relating to a mounting structure for an electronic control device for a vehicle, there is a technique in which an intake passage is provided in a top section of a cylinder head of an engine, and an electronic control device for a vehicle is arranged in a position distanced from the engine on the top side of a section of this intake passage and extending laterally from the cylinder head (for example, refer to Japanese Unexamined Patent Application, First Publication No. H11-294216).

However, in consideration of the actual layout of the electronic control device for a vehicle on the vehicle body, in many cases, since there is not sufficient space, the electronic control device for a vehicle cannot be mounted in a position distanced from the engine as described above. As a result, there is a problem in wich the electronic control device for a vehicle is likely to be influenced by heat from engine.

A first object of the present invention is to provide a mounting structure for an electronic control device for a vehicle which can prevent the heat of an engine affecting an electronic control device for a vehicle.

In addition, as a technique relating to a mounting structure for a heat-generating component of a throttle body having a throttle valve, there is disclosed a structure in which a metal plate is attached to a throttle body base having an intake passage formed therein, and a circuit board and the heat-generating component are attached thereabove, so that the heat of the heat-generating component is radiated (for example, refer to Japanese Examined Utility Model, Second Publication No. H03-42716).

However, there is a problem that the number of parts increases in the case in which the metal plate is attached to the throttle body, and thereafter the heat-generating component is attached thereon.

A second object of the present invention is to provide a mounting structure for a heat-generating component of a throttle body which enables efficient radiation of the heat of the heat-generating component, and enables a reduction in the number of parts.

In particular, prior art document US 2002/0179025 A1 discloses an integrated manifold assembly for routing electrical signals in an internal combustion engine, wherein surrounding the intake manifold on a specific housing a main circuit portion is fixed thereon and supported and protected by a cover. The main circuit is based on a substrate which may include a plurality of electronic components which are preferably surface mounted components, such as integrated circuits or power devices. The substrate of the main circuit may be removably attached to the top surface of the housing. A heat sink which is affixed to the air-intake manifold may be in contact with at least one of a main circuit portion for dissipating heat generated in the circuit portions.

Prior art document DE 198 14 679 A1 discloses a cylinder head for an internal combustion engine wherein an intake manifold is connected to the cylinder head, the intake manifold comprising respective sensors as well as a throttle valve. Components of an electronic circuit may be arranged on a metal cover of the cylinder head so that heat emitted by the electronic components may be dissipated by the heat conducting material of the cover.

Prior art document EP 1 281 848 A2 discloses a throttle valve assembly for an engine wherein the throttle valve is operated by a setting device including an electric motor. The throttle valve is arranged in an intake passage through which air is supplied to the engine. At one side of the intake passage a separate housing with a circuit board including an electronic control circuit is arranged. The housing is closed with a separate cover.

Prior art document JP 2003-074379 A discloses an intake air quantity control device for an engine, wherein a mechanism for operating a throttle valve is arranged at one side of an intake passage in which the throttle valve is rotatably provided. The mechanism accommodated in a particular housing carries a further housing wherein a circuit board with electronic circuits is arranged, the electronic circuits being adapted for controlling and setting the throttle valve and for detecting particular operating conditions of the internal combustion engine to which the mechanism is provided and of the throttle valve.

### DISCLOSURE OF THE INVENTION

According to the present invention these objects are accomplished by a mounting structure for an electronic control device for a vehicle as well as by a mounting structure for a heat-generating component of an electronic control device as set out in the appended claims.

A mounting structure for an electronic control device for a vehicle of the present invention includes: a cylinder block or cylinder head of an engine; an intake passage which is connected to the engine and which is arranged above the cylinder block or above the cylinder head; and the electronic control device for a vehicle arranged above the cylinder block or the cylinder head, and above the intake passage.

According to the mounting structure for an electronic control device for a vehicle, even in the case in which the electronic control device for a vehicle is required to be arranged above the cylinder block or above the cylinder head of the engine due to layout restrictions, by arranging the electronic control device for a vehicle above the intake passage, which is arranged above the cylinder block or the cylinder head, the heat rising from the cylinder block or the cylinder head can be shielded by the intake passage and prevented from reaching the electronic control device for a vehicle. Moreover, the heat generated from the electronic control device for a vehicle itself can also be radiated into the intake passage.

Consequently, influence of heat from the engine on the electronic control device for a vehicle can be avoided. As a result, the above first object can be achieved.

A throttle body having a throttle valve may be arranged above the cylinder block or the cylinder head, and the intake passage may be formed on this throttle body.

In this case, the electronic control device for a vehicle can be integrally built into the throttle body, and thus modularized and attached to the engine. As a result, the intake passage of the throttle body can prevent the heat rising from the cylinder block or the cylinder head, from reaching the electronic control device for a vehicle.

A mounting structure for a heat-generating component of a throttle body includes: a throttle body which has a throttle valve, and a metal throttle body base formed with an intake passage in which the throttle valve is arranged; and a heat-generating component which is directly attached to the throttle body base.

According to the mounting structure for an electronic control device for a vehicle, since the heat-generating component is directly attached to the throttle body base, the heat of the heat-generating component can be efficiently radiated by the metal throttle body base, and an additional metal plate is not required.

As a result, since the heat of the heat-generating component can be efficiently radiated, and the number of parts can be reduced, the above second object can be achieved.

Connection pins may be extended from the heat-generating component on the opposite side to the throttle body base, and a circuit board having connection holes for insertion of the connection pins may be arranged on the side of the heat-generating component opposite to the throttle body base.

In this case, the heat-generating component is directly attached to the throttle body base, and subsequently the circuit board can be attached to the throttle body base, so that it is on the side of the heat-generating component opposite to the throttle body base, while inserting the connection pins extending from the heat-generating component into the connection holes. As a result, the heat-generating component can be distanced from the circuit board. Moreover, the circuit board can be distanced from the mounting position of the heat-generating component on the throttle body base.

Therefore, the influence of the heat generated by the heat-generating component, on the circuit board can be reduced, and the reliability with respect to heat influence of parts mounted on the circuit board can be improved.

The heat-generating component may be arranged on the upstream side of the throttle valve in a direction of extension of the intake passage.

In this case, since the heat-generating component is arranged on the upstream side of the throttle valve in the direction of extension of the intake passage, where the influence of heat from the engine is less likely to be received, the heat of the heat-generating component can be further efficiently radiated from the metal throttle body base.

The heat-generating component may be embedded in potting resin.

In this case, by embedding the heat-generating component in the potting resin, the heat generated by the heat-generating component can also be absorbed by the potting resin. As a result, the heat of the heat-generating component can be further efficiently radiated.

### BRIEF DESCRIPTION OF THE DRAWINGS

FIG. 1 is a perspective view showing one embodiment of a throttle body assembly to which a mounting structure for an electronic control device for a vehicle of the present invention has been applied.
FIG. 2 is a perspective view of the throttle body assembly seen from another direction.
FIG. 3 is an exploded perspective view of the throttle body and the vehicle electronic control unit of the same embodiment.
FIG. 4 is a sectional view of the same throttle body.
FIG. 5 is a plan view of the same throttle body.
FIG. 6 is a side view of a motor cycle furnished with the same throttle body.
FIG. 7 is a plan view of the same motor cycle.
FIG. 8 is a side view of another motor cycle furnished with the throttle body.
FIG. 9 is a side view of yet another motor cycle furnished with the throttle body.
FIG. 10 is a partially enlarged plan view of FIG. 9.
FIG. 11 is a perspective view showing the throttle body assembly provided with a mounting structure for a heat-generating component of the throttle body, of the present invention.
FIG. 12 is a perspective view of the same throttle body assembly and other parts seen from another direction.
FIG. 13 is an exploded perspective view showing the throttle body assembly of the same embodiment.
FIG. 14 is a sectional view of the throttle body.
FIG. 15 is a plan view of the throttle body.

### BEST MODE FOR CARRYING OUT THE INVENTION

### (Mounting structure for an electronic control device for a vehicle)

One embodiment of a mounting structure for an electronic control device for a vehicle of the present invention is described hereunder, with reference to the figures.

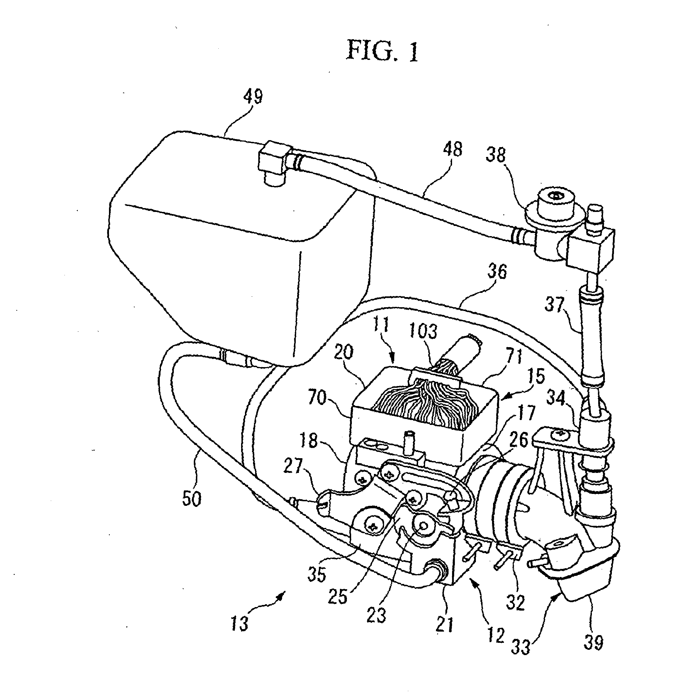

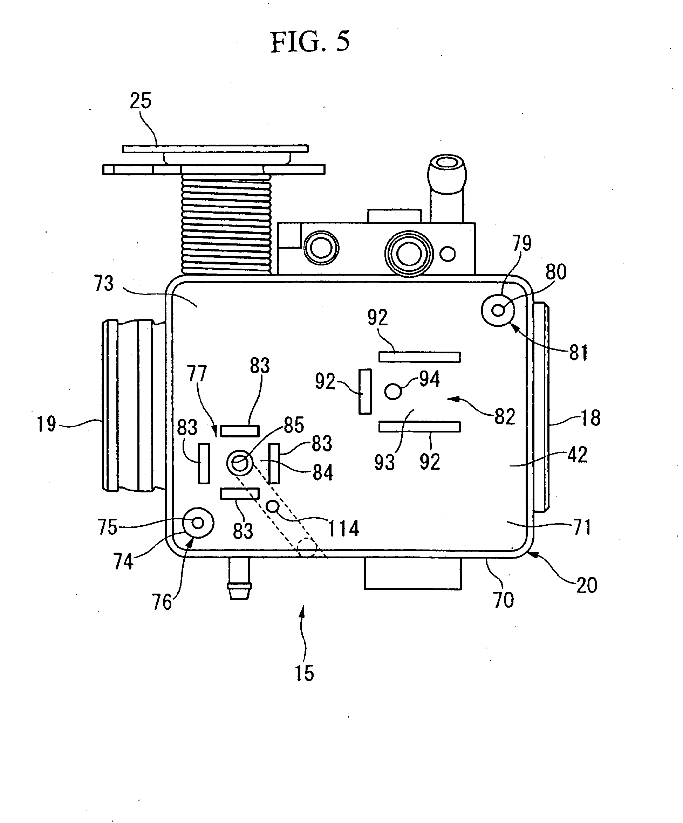

At first, a modularized throttle body assembly 13 in which an engine control unit (electronic control device for a vehicle) 11 used in the present embodiment is integrally built into a throttle body 12, is described with reference to FIG. 1 to FIG. 5.

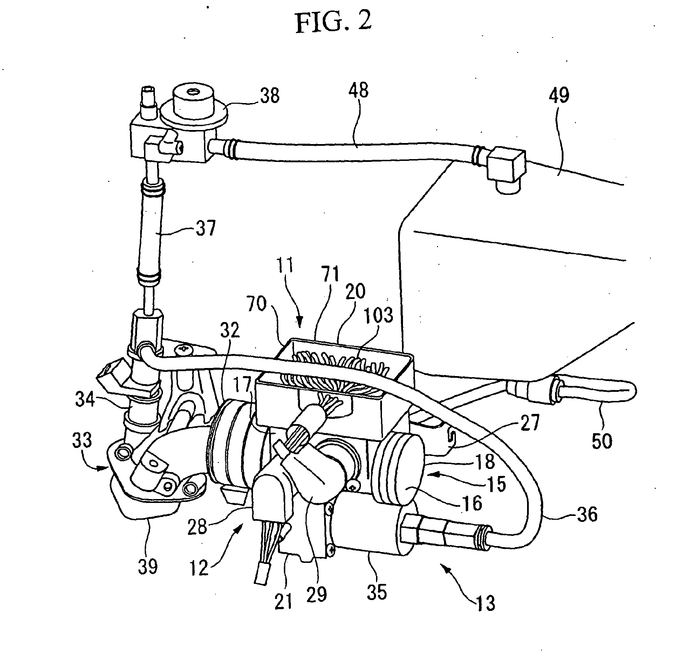

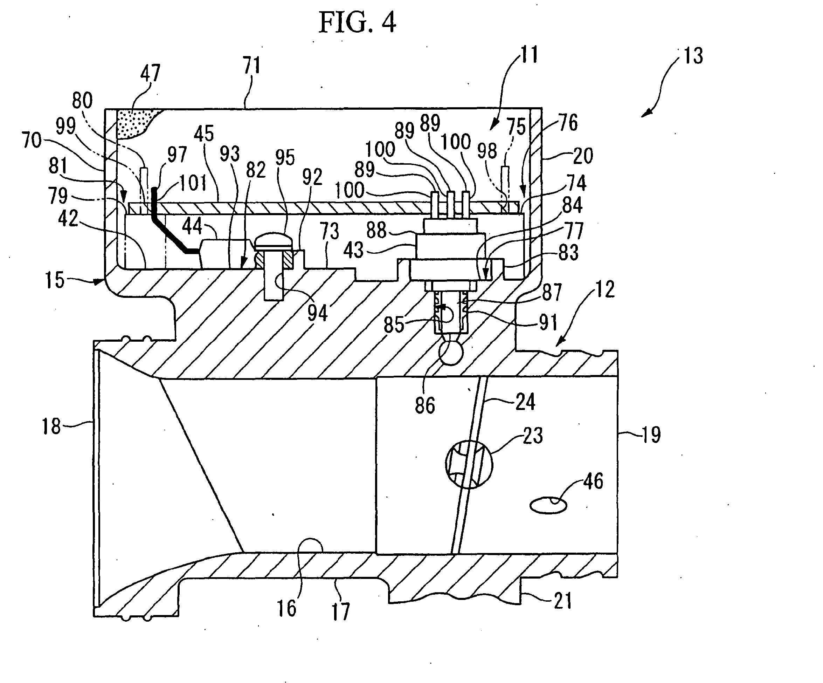

The throttle body assembly 13 shown in FIG. 1 and FIG. 2 has a throttle body base 15. As shown in FIG. 4, the throttle body base 15 is integrally formed from a metal such as aluminum and has: an approximately stepped cylinder shaped intake passage forming section 17 inside of which is formed an intake passage 16 having a circular axi-orthogonal cross-section and extended in one direction as shown in FIG. 4; a cylinder shaped inlet side duct section 18 formed on one end side in the extending direction of the intake passage 16 of the intake passage forming section 17 as shown in FIG. 1 to FIG. 5; a cylinder shaped outlet side duct section 19 formed on the other end side of the intake passage forming section 17; a box shape housing 20, which is formed on a top portion of the intake passage forming section 17, and which has an opening on the side opposite to the intake passage forming section 17; and a fuel pump attaching section 21 provided on a bottom side of the intake passage forming section 17.

Moreover, in the throttle body assembly 13, in the intake passage 16 of the throttle body base 15, there is provided a throttle valve 24, which rotates about a rotation shaft 23 so as to open and close the intake passage 16. On a side part of the throttle body base 15, as shown in FIG. 1, there is provided a rotation member 25 which is joined to the rotation shaft 23 on the same axis and is rotated by a throttle wire (not shown in the figures), and a stopper member 27 which supports the throttle wire and adjusts the rotation limit position of the rotation member 25 with an adjustment screw 26.

Furthermore, in the throttle body assembly 13, as shown in FIG. 2, a throttle opening sensor 28 which detects the opening of the throttle valve 24 by detecting a rotation angle of the rotation shaft 23, is provided on the side of the throttle body base 15 opposite to the rotation member 25 side. Moreover, a secondary air supply unit 29 is provided alongside of this throttle opening sensor 28.

Here, the throttle body 12 includes as the main components: the throttle body base 15, the throttle valve 24, the rotation member 25, the stopper member 27, the throttle opening sensor 28, and the secondary air supply unit 29.

The throttle body assembly 13 is provided with: a connection tube 32 (refer to FIG. 1 and FIG. 2) connected to the outlet side duct section 19 (refer to FIG. 4) of the intake passage section 17 of the throttle body base 15; an intake manifold 33 which communicates with the intake passage 16 of the intake passage forming section 17 by being connected to the outlet side duct section 19 of the intake passage forming section 17 through this connection tube 32, and inside of which is formed the intake passage 16 (not shown in the figure); an injector 34 which is attached to the intake manifold 33 and which injects fuel into the intake passage 16; a fuel pump 35 which is attached to the fuel pump attaching section 21 of the throttle body base 15, and supplies fuel to the injector 34; a pipe line 36 which connects between the injector 34 and the fuel pump 35; a pipe line 37 connected to the injector 34; and a relief valve 38 connected to the pipe line 37. Moreover, the intake manifold 33 is bent at a point part way along its length, so that an engine attaching section 39 provided on the opposite side to the throttle body 12 faces downward.

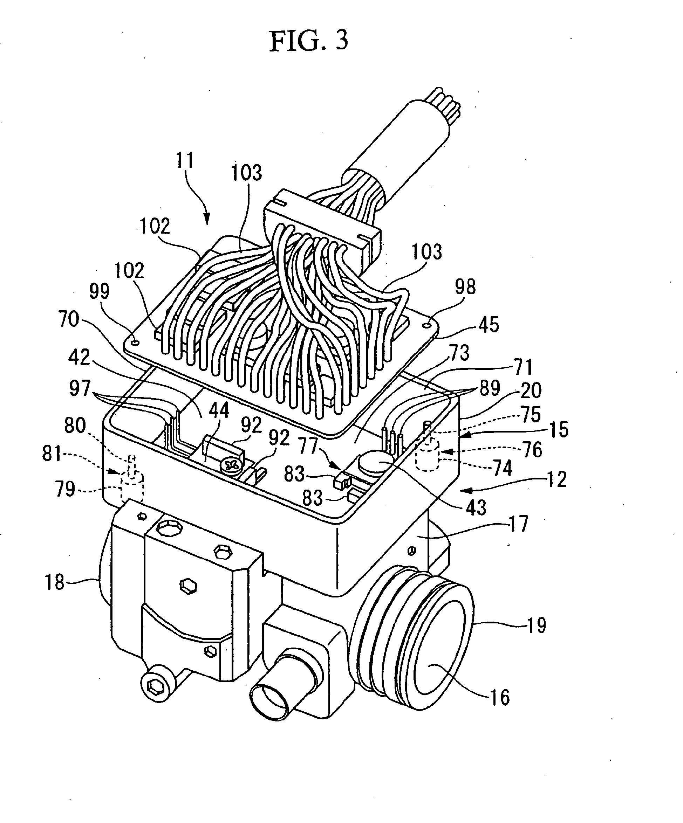

Furthermore, as shown in FIG. 3 and FIG. 4, the throttle body assembly 13 has an intake air pressure sensor 43 (electric part), and a power transistor 44 (electric part, heat-generating part), both of which are attached to a bottom section 42 of the housing 20.

The intake air pressure sensor 43 is connected to a circuit board (electric part) 45 which is accommodated in the housing 20, and detects the pressure, which is interior information of the intake passage 16, via an aperture section 46 (refer to FIG. 4) which opens to the intake manifold 33 side of the throttle valve 24 in the intake passage 16.

The power transistor 44 is connected to the circuit board 45 accommodated in the housing 20, and constitutes the engine control unit 11 (so called ECU) which electronically controls the engine, together with the circuit board 45.

Resin potting in which resin 47 is filled in a gap as partially shown in FIG. 4, is carried out on the housing 20, with the circuit board 45 accommodated therein. Then, the circuit board 45, the intake air pressure sensor 43, and the power transistor 44 are also embedded in this potting resin 47.

In the above described throttle body assembly 13, as shown in FIG. 1 and FIG. 2, the relief valve 38 is connected to a fuel tank 49 via a pipe line 48, and the fuel pump attaching section 21 is connected to the fuel tank 49 via a pipe line 50. As a result, the fuel pump 35 sucks in fuel from the fuel tank 49 through the pipe line 50, and supplies the fuel to the injector 34 through the pipe line 36.

The housing 20 formed above the throttle body 12 is formed in a shape having a rectangle shaped bottom section 42, and wall sections 70 which are provided in an upright rectangle casing shape on the four peripheral edges of the bottom section 42, and having an opening section 71 at the top of the housing 20. Moreover, on a corner of the rectangle shaped bottom section 42, more specifically, on the corner on the outlet side duct section 19 side and the throttle opening sensor 28 side, as shown in FIG. 3 to FIG. 5, a mounting stand 74 for mounting the circuit board 45, which projects from a bottom section 73 to the opening section 71 side, is integrally formed, and an insertion pin 75 which projects to the opening section 71 side, is provided on this mounting stand 74, thereby constructing a board attaching section 76 for attaching the circuit board 45. Moreover, a sensor attaching section 77 to which the intake air pressure sensor 43 is attached, is formed in the proximity of the board attaching section 76 of the bottom section 73.

In addition, on a corner positioned diagonal to the aforementioned corner of the bottom section 42, more specifically, on the corner on the inlet side duct section 18 side and the rotation member 25 side, as shown in FIG. 3 to FIG. 5, a mounting stand 79 for mounting the circuit board 45, which projects from the bottom section 73 to the opening section 71 side is also integrally formed. An insertion pin 80, which projects to the opening section 71 side, is provided on this mounting stand 79, thereby constructing a board attaching section 81 for the circuit board 45. Furthermore, a parts attaching section 82 to which the power transistor 44 is attached, is formed in the proximity of the board attaching section 81 of the bottom section 73. The sensor attaching section 77 and the parts attaching section 82 are formed on diagonal positions on the bottom section 42.

The sensor attaching section 77 has a positioning section 84 which is surrounded by a wall section 83, and is thus formed on the bottom section 73, and an insertion passage hole 85 (insertion hole) bored into this positioning section 84. The insertion passage hole 85 communicates with the aperture section 46, which opens to the intake manifold 33 side with respect to the throttle valve 24, of the intake passage 16.

As shown in FIG. 4, the intake air pressure sensor 43 has an insertion section 87 which is inserted into the insertion passage hole 85, and whose tip end surface is a detection section 86, and a sensor body section 88 which is positioned with respect to the housing 20, by mounting in the positioning section 84 so that the insertion section 87 is inserted into the insertion passage hole 85. A plurality of connection pins 89 which extend in the direction opposite to that of the insertion section 87, are provided (specifically at three places) on the sensor body section 88. A cylinder shaped sealing member 91 is installed in a gap between the outer surface of the insertion section 87 and the inner surface of the insertion passage hole 85. This sealing member 91 is inserted into the insertion passage hole 85 together with the insertion section 87, in a state of having been pre-engaged with the insertion section 87.

The parts attaching section 82 has a positioning section 93 which is surrounded by wall section 92 and is formed on the bottom section 73, and a screw hole 94 formed in this positioning section 93.

The power transistor 44 is positioned in the housing 20 by being mounted inside the positioning section 93. In this positioned state, by screwing an attaching screw 95 into the screw hole 94 through the power transistor 44, the power transistor 44 is attached so that it directly contacts with the bottom section 42 of the housing 20 (in other words, is directly attached). As shown in FIG. 3, a plurality of connection pins 97 which extend to the opening section 71 side in this attached state, are formed (specifically at three places) on the power transistor 44.

Electric parts 102, external connection wiring 103, and so forth, are pre-mounted on the circuit board 45. A guide hole 98 for insertion of the insertion pin 75, and a guide hole 99 for insertion of the insertion pin 80, are formed in diagonally opposite positions on the rectangular circuit board 45. As shown in FIG. 4, on the circuit board 45 in the proximity of the one guide hole 98, connection holes 100 for insertion of the connection pins 89 of the intake air pressure sensor 43 attached to the housing 20 are formed numbering as many as the number of the connection pins 89. In the position in the proximity of the other guide hole 99, connection holes 101 for insertion of the connection pins 97 of the power transistor 44 attached to the housing 20 are formed numbering as many as the number of the connection pins 97.

When attaching these parts, the intake air pressure sensor 43 in a condition with the sealing member 91 fitted to the insertion section 87, is attached to the sensor attaching section 77 of the bottom section 42 of the housing 20, and after the power transistor 44 has been attached to the parts attaching section 82, the circuit board 45 is attached to the housing 20. In other words, the circuit board 45 is mounted on both the mounting stands 74 and 79, inserting the connection pins 89 and 97 of the intake air pressure sensor 43 and the power transistor 44 into the connection holes 100 and 101 of the circuit board 45, while inserting the insertion pins 75 and 80 of both board attaching sections 76 and 81 of the housing 20, into both guide holes 98 and 99 which are diagonally positioned on the circuit board 45.

Next, the connection pins 89 and 97 which project from the circuit board 45 to the opening section 71 side are connected to the circuit board 45 by means of soldering or the like.

Then, by carrying out resin potting into the housing 20, which is accommodating the circuit board 45, so as to fill up to the level of the opening section 71, the circuit board 45, the intake air pressure sensor 43, and the power transistor 44 are embedded in the potting resin 47. As a result, the circuit board 45, in the state of being mounted on both the mounting stands 74 and 79, is attached to both the board attaching sections 76 and 81, and is thus attached to the housing 20.

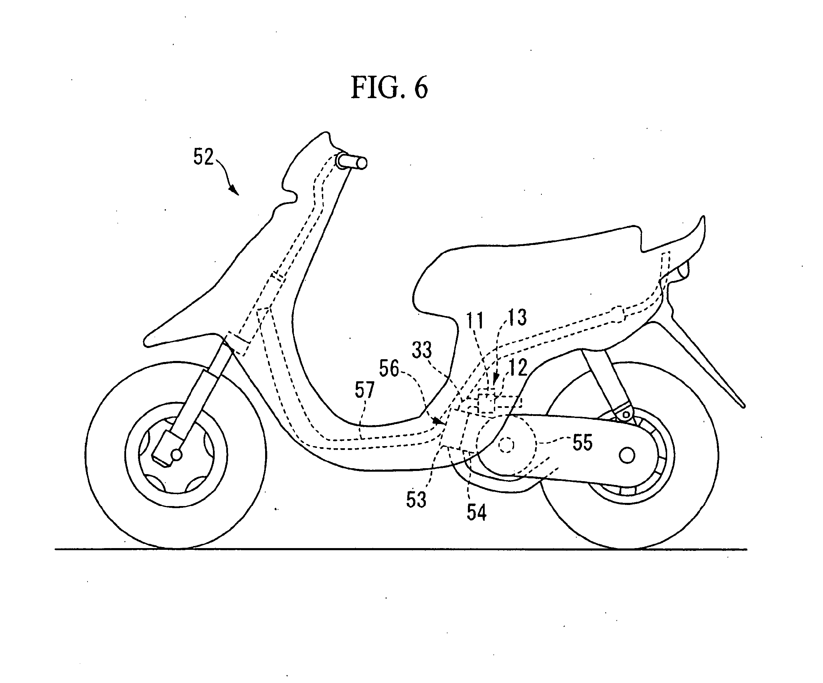

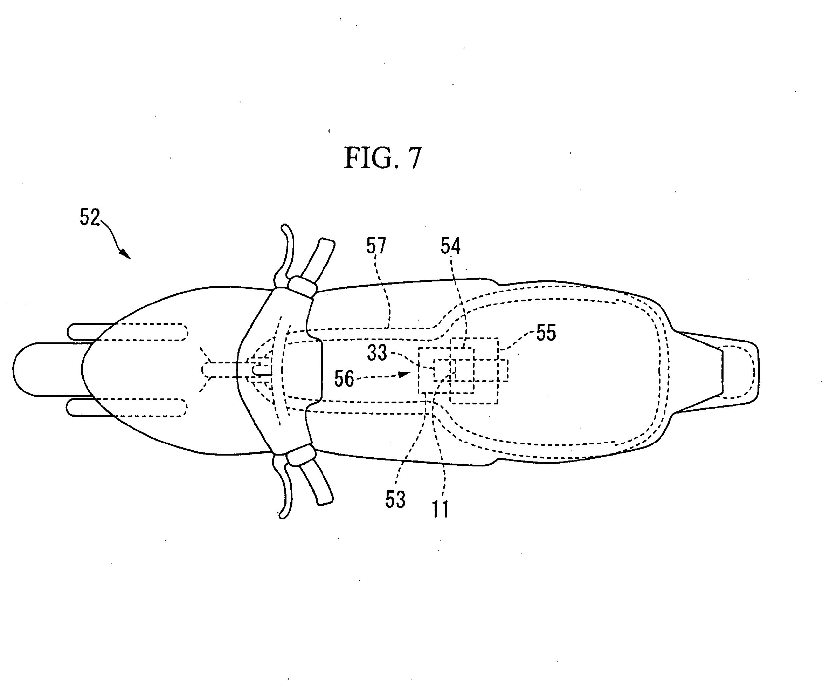

The modularized throttle body assembly 13, in which the engine control device 11 is integrally built into the throttle body 12, is arranged for example in a motor cycle (vehicle) 52 shown in FIG. 6 and FIG. 7. Here, the throttle body assembly 13 is arranged on the top side of an engine 56 in the scooter type motor cycle 52, which has a forward tilting engine 56 in which a cylinder head 53 and a cylinder block 54 extend to the front side of a crankcase 55.

Specifically, in the throttle body assembly 13, the engine attaching section 39 is attached to the cylinder head 53 of the engine 56 via a resin spacer or the like (not shown in the figures), in a state where the intake manifold 33 faces the front side of the vehicle body, the throttle body 12 faces the rear side of the vehicle body, and the engine attaching section 39 of the intake manifold 33 faces downward.

Accordingly, the throttle body 12 having the throttle valve 24 is arranged over the top of the cylinder block 54. Moreover, the engine control device 11 is arranged so that it is above the cylinder block 54 and above the throttle body 12. The engine control device 11 is arranged in the proximity of a vehicle body frame 57.

As a result, the intake passage 16 formed in the throttle body 12 is interposed in an overlapped condition between the engine control device 11 arranged above the cylinder block 54, and the cylinder block 54. The inlet side duct section 18 is connected to an air cleaner side (not shown in the figures).

According to the present embodiment described above, even in the case in which the engine control device 11 is required to be arranged above the cylinder block 54 of the engine 56 as described above, for reasons such as layout restriction, by arranging the engine control device 11 above the intake passage 16 inside the throttle body 12 which is arranged above the cylinder block 54, the heat rising from the cylinder block 54 can be blocked by the intake passage 16, and prevented from reaching the engine control device 11. In other words, as described above, in the case of a structure in which the engine control device 11 is integrally built into the throttle body 12, and thus modularized and attached to the engine 56, the heat rising from the cylinder block 54 can be prevented from reaching the engine control device 11 by the intake passage 16 of the throttle body 12. Therefore, influence of the heat from the engine 56 can be avoided. In addition, the heat generated from the engine control device 11 can also be radiated into the intake air flowing inside the intake passage 16.

Furthermore, by arranging the engine control device 11 above the intake passage 16, the control system can be consolidated.

In addition, as a result of providing the engine control device 11 in the proximity of the vehicle body frame 57, handling of a harness from the vehicle body frame 57 side becomes easier, and the harness can be shortened.

Furthermore, as a result of providing the engine control device 11 above the intake passage 16, the engine control device 11 is unlikely to suffer a direct impact in the event of the vehicle toppling, unlike the case of arranging the engine control device 11 on the side of the intake passage 16.

Moreover, by arranging the engine control device 11 above the intake passage 16, the operationality of failure diagnoses using the engine control device 11 is improved, compared to the case where the engine control device 11 is arranged under the intake passage 16.

Furthermore, in the case in which the engine control device 11 is required to be arranged above the cylinder head 53, the intake passage 16 may be arranged above the cylinder head 53, and the engine control device 11 may be arranged above the cylinder head 53 and the intake passage 16. Moreover, in the case in which the engine control device 11 is arranged across the top of both the cylinder head 53 and the cylinder block 54, the intake passage 16 may be arranged above the cylinder head 53 and the cylinder block 54, and the engine control device 11 may to be arranged above the cylinder head 53, the cylinder block 54, and the intake passage 16.

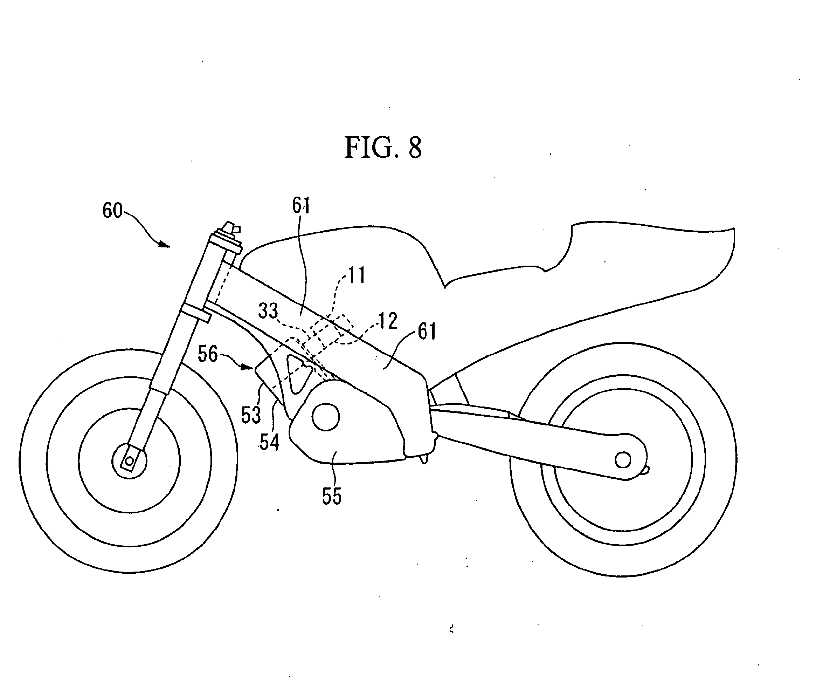

Furthermore, as shown for example in FIG. 8, also in the case of application to a road model type motor cycle (vehicle) 60 which has a forward tilting engine 56 in which a cylinder head 53 and a cylinder block 54 extend to the front side of a crankcase 55, by having an arrangement where the throttle body 12 having the intake passage 16, is arranged so as to overlap above the cylinder block 54, and furthermore the engine control device 11 is arranged overlapping above the throttle body 12, the intake passage 16 formed in the throttle body 12 may be interposed between the cylinder block 54 and the engine control device 11. In this example, both sides of the engine control device 11 are covered by a vehicle body frame 61, and thus protected by the vehicle body frame 61.

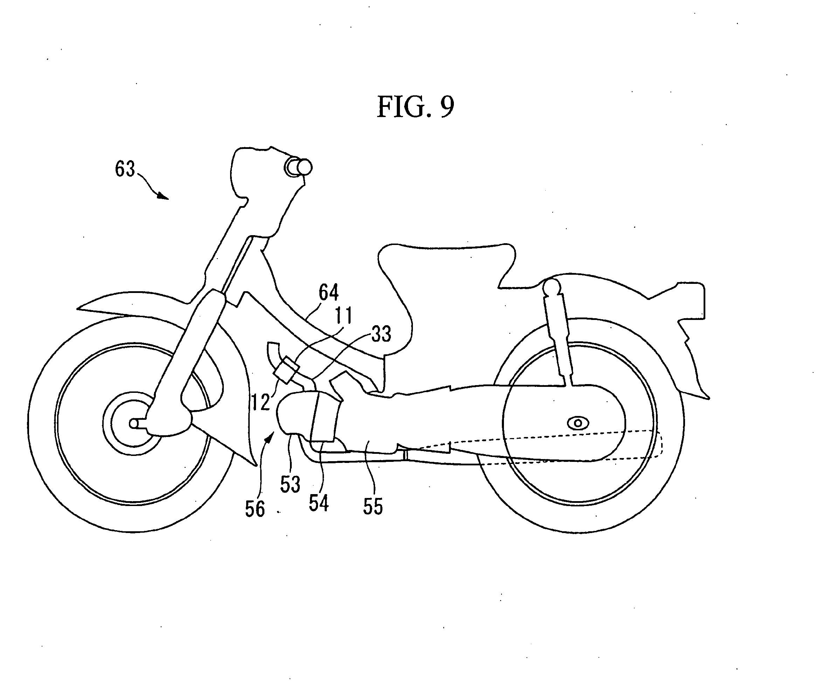

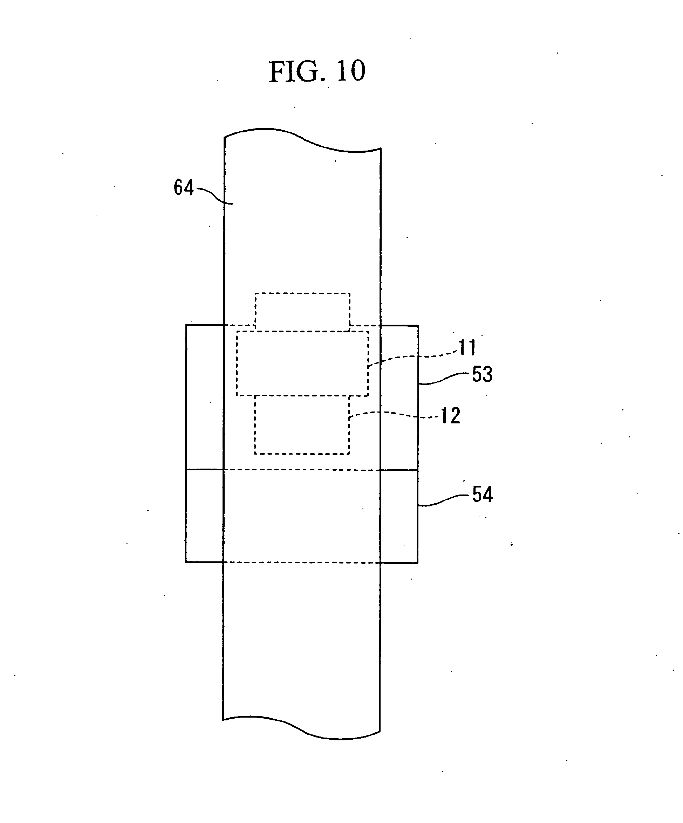

In addition, as shown for example in FIG. 9 and FIG. 10, also in the case of application to a business type motor cycle 63 which has a forward tilting engine 56 in which a cylinder head 53 and a cylinder block 54 extend to the front side of a crankcase 55, by arranging the throttle body 12 overlapped above the cylinder head 53, and furthermore by arranging the engine control device 11 overlapped above the throttle body 12, the intake passage 16 formed in the throttle body 12 may be interposed between the engine control device 11 and the cylinder head 53. In this example, as shown in FIG. 10, a vehicle body frame 64 is provided so as to overlap the top side of the engine control device 11.

### (Mounting structure for a heat-generating component of a throttle body)

Hereinafter, one embodiment of a mounting structure for a heat-generating component of a throttle body of the present invention is described with reference to the figures.

A modularized throttle body assembly 13A is described, in which an engine control device (electronic control device for a vehicle) 11A, to which the present embodiment is applied, is integrally built into a throttle body 12A.

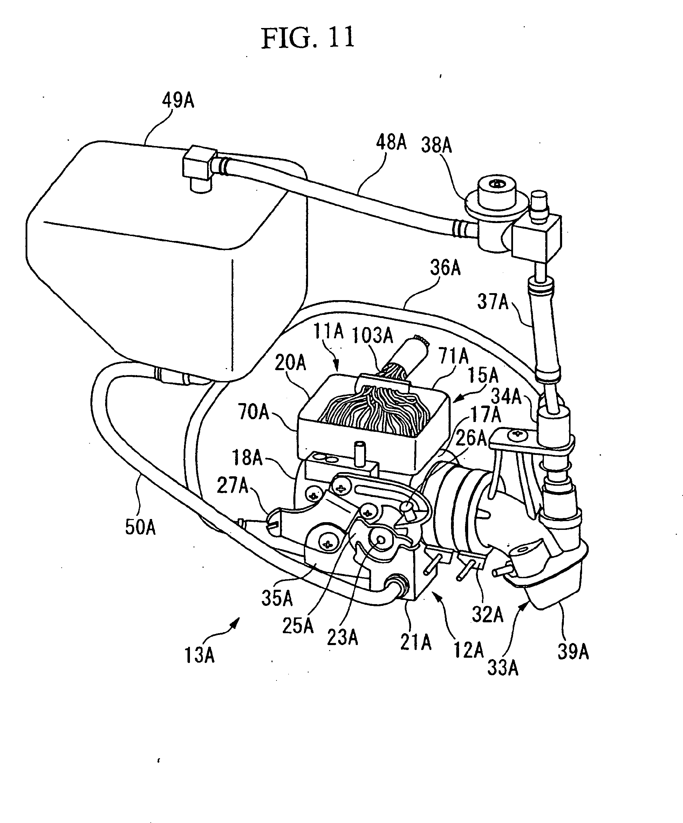

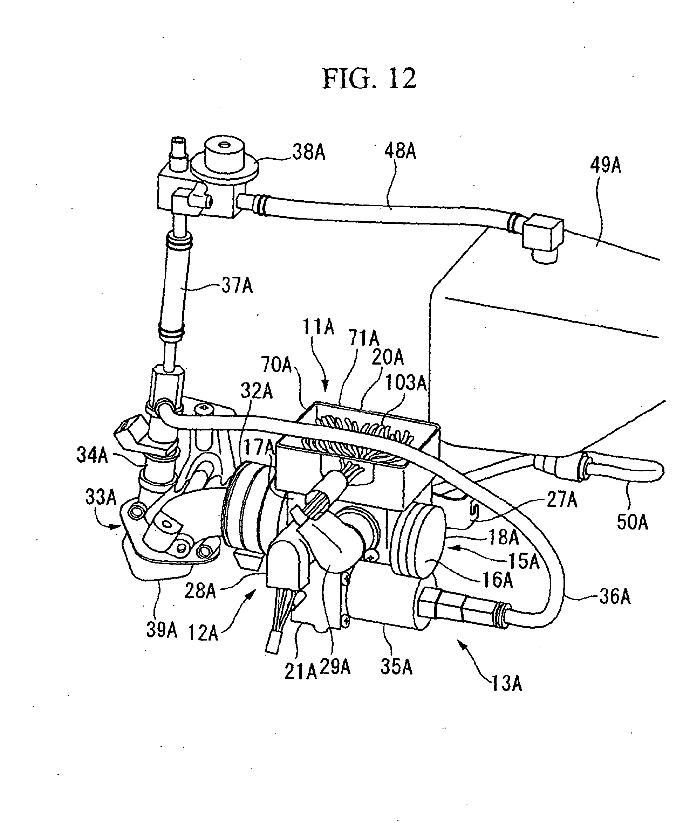

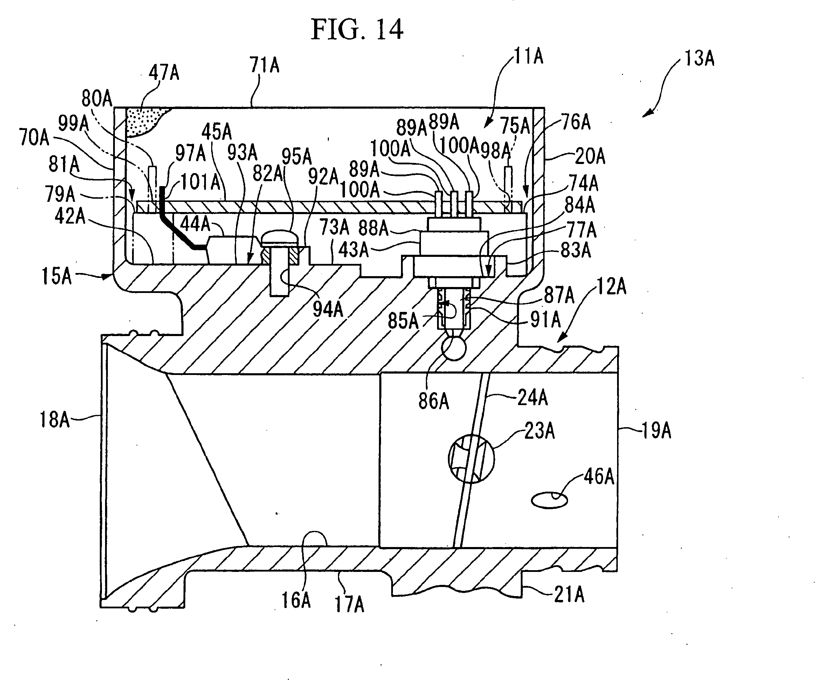

The throttle body assembly 13A shown in FIG. 11 and FIG. 12 is to be mounted on, for example, a motorcycle, and has a throttle body base 15A. The throttle body base 15A is integrally formed from a metal such as aluminum and has: an approximately stepped cylinder shaped intake passage forming section 17A inside of which is formed an intake passage 16A having a circular axi-orthogonal cross-section and extended in one direction as shown in FIG. 14; a cylinder shaped inlet side duct section 18A formed on one end side in the extending direction of the intake passage 16A of the intake passage forming section 17A; a cylinder shaped outlet side duct section 19A formed on the other end side of the intake passage forming section 17A; a housing 20A for accommodating electric parts, which is formed outside of the throttle body 12A and on a top side of the intake passage forming section 17A, and which has an opening on the side opposite to the intake passage forming section 17A; and a fuel pump attaching section 21 A provided on a bottom side of the intake passage forming section 17A.

Moreover, a throttle valve 24A, which rotates about a rotation shaft 23A so as to open and close the intake passage 16A, is provided in the intake passage 16A of the throttle body base 15A, in the throttle body assembly 13A. On a side part of the throttle body base 15A, as shown in FIG. 11, there is provided a rotation member 25A which is joined to the rotation shaft 23A on the same axis and is rotated by a throttle wire (not shown in the figures), and a stopper member 27A which supports the throttle wire and adjusts the rotation limit position of the rotation member 25A with an adjustment screw 26A.

Furthermore, in the throttle body assembly 13A, as shown in FIG. 12, a throttle opening sensor 28A which detects the opening of the throttle valve 24A by detecting a rotation angle of the rotation shaft 23A, is provided on the side of the throttle body base 15A opposite to the side where the rotation member 25A is located. Moreover, a secondary air supply unit 29A is provided alongside of this throttle opening sensor 28A.

Here, the throttle body 12A includes as the main components: the throttle body base 15A, the throttle valve 24A, the rotation member 25A, the stopper member 27A, the throttle opening sensor 28A, and the secondary air supply unit 29A.

The throttle body assembly 13A is provided with: a connection tube 32A (refer to FIG. 11 and FIG. 12) connected to the outlet side duct section 19A (refer to FIG. 14) of the intake passage section 17A of the throttle body base 15A; an intake manifold 33A which communicates with the intake passage 16A of the intake passage forming section 17A by being connected to the outlet side duct section 19A of the intake passage forming section 17A through this connection tube 32A, and inside of which is formed the intake passage 16A; an injector 34A which is attached to the intake manifold 33A and which injects fuel into the intake passage16A; a fuel pump 35A which is attached to the fuel pump attaching section 21A of the throttle body base 15A, and supplies fuel to the injector 34A; a pipe line 36A which connects between the injector 34A and the fuel pump 35A; a pipe line 37A connected to the injector 34A; and a relief valve 38A connected to the pipe line 37A. The intake manifold 33A is bent at a point part way along its length so that an engine attaching section 39A provided on the opposite side to the throttle body 12A faces downward.

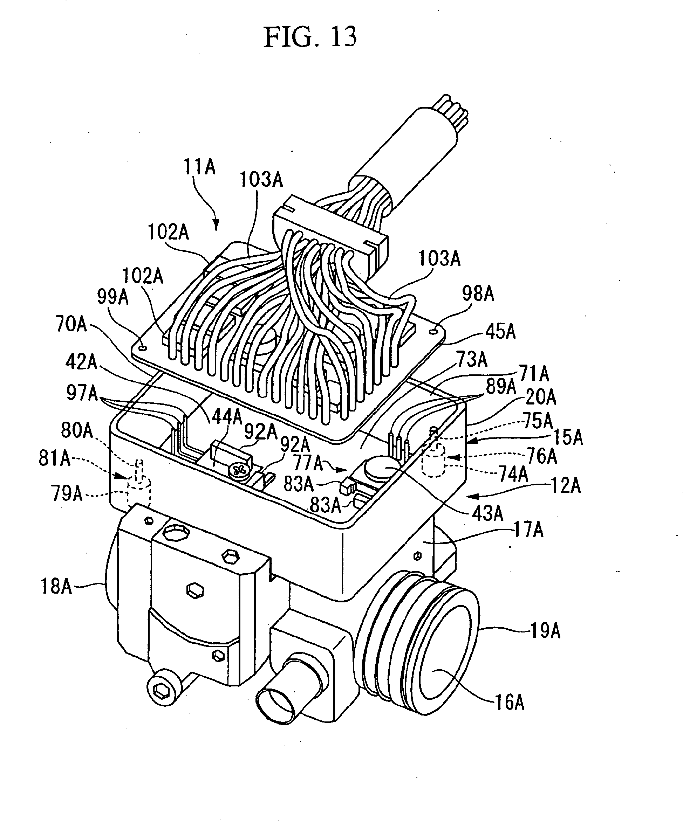

Furthermore, as shown in FIG. 13 and FIG. 14, the throttle body assembly 13A has an intake air pressure sensor (electric part, intake passage information detection sensor) 43A, and a power transistor (electric part, heat-generating part) 44A, both of which are attached to a bottom section 42A of the housing 20A.

The intake air pressure sensor 43A is connected to a circuit board (electric part) 45A arranged on the opposite side to the throttle body base 15A, and accommodated in the housing 20A, and detects the pressure, which is interior information of the intake passage 16A, via an aperture section 46A (refer to FIG. 14) which opens to the intake manifold 33A side of the throttle valve 24A in the intake passage 16A.

The power transistor 44A is connected to the circuit board 45A arranged on the opposite side to the throttle body base 15A and accommodated in the housing 20A, and constitutes the engine control unit 11A (so called ECU) which electronically controls the engine, together with the circuit board 45A.

Resin potting in which resin 47A is filled in a gap as partially shown in FIG. 14, is carried out on the housing 20A in a condition with the circuit board 45A accommodated therein. Then, the circuit board 45A, the intake air pressure sensor 43A, and the power transistor 44A are also embedded in this potting resin 47A.

In the above described throttle body assembly 13A, as shown in FIG. 11 and FIG. 12, the relief valve 38A is connected to a fuel tank 49A via a pipe line 48A, and the fuel pump attaching section 21A is connected to the fuel tank 49A via a pipe line 50A. As a result, the fuel pump 35A sucks in fuel from the fuel tank 49A through the pipe line 50A, and supplies the fuel to the injector 34A through the pipe line 36A.

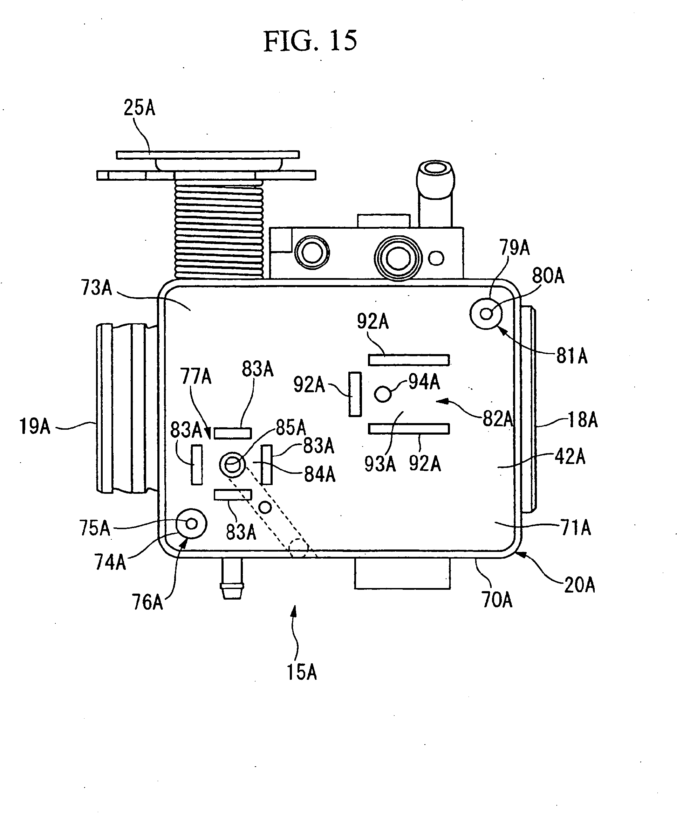

The housing 20A formed above the throttle body 12A is formed in a shape having a rectangle shaped bottom section 42A, and wall sections 70A which are provided in an upright rectangle casing shape on the four peripheral edges of the bottom section 42A, and has an opening section 71A at the top of the housing 20A. Moreover, on a corner of the rectangle shaped bottom section 42A, more specifically, on the corner on the outlet side duct section 19A side and the throttle opening sensor 28A side, as shown in FIG. 13 to FIG. 15, a mounting stand 74A for mounting the circuit board 45A, which projects from a bottom section 73A to the opening section 71A side, is integrally formed, and an insertion pin 75A which projects to the opening section 71A side, is provided on this mounting stand 74A, thereby constructing a board attaching section 76A for attaching the circuit board 45A. Moreover, a sensor attaching section 77A to which the intake air pressure sensor 43A is attached, is formed in the proximity of the board attaching section 76A of the bottom section 73A.

In addition, on a corner positioned diagonal to the aforementioned corner of the bottom section 42A, more specifically, on the corner on the inlet side duct section 18A side and the rotation member 25A side, as shown in FIG. 13 to FIG. 15, a mounting stand 79A for mounting the circuit board 45A, which projects from the bottom section 73A to the opening section 71 A side is also integrally formed. An insertion pin 80A, which projects to the opening section 71A side, is provided on this mounting stand 79A, thereby constructing a board attaching section 81 A for attaching the circuit board 45A. Moreover, a parts attaching section 82A to which the power transistor 44A is attached, is formed in the proximity of the board attaching section 81A of the bottom section 73A. The sensor attaching section 77A and the parts attaching section 82A are formed on diagonal positions on the bottom section 42A.

The sensor attaching section 77A has a positioning section 84A which is surrounded by a wall section 83A, and is thus formed on the bottom section 73A, and an insertion passage hole 85A (insertion hole) bored into in this positioning section 84A. The insertion passage hole 85A communicates with the aperture section 46A, which is open to the intake manifold 33A side with respect to the throttle valve 24A, of the intake passage 16A.

As shown in FIG. 14, the intake air pressure sensor 43A has an insertion section 87A which is inserted into the insertion passage hole 85A, and whose tip end surface is a detection section 86A, and a sensor body section 88A which is positioned with respect to the housing 20A, by being mounted in the positioning section 84A so that the insertion section 87A is inserted into the insertion passage hole 85A. A plurality of connection pins 89A which extend in the direction opposite to that of the insertion section 87A, are provided (specifically at three places) on the sensor body section 88A. A cylinder shaped sealing member 91 A is installed in a gap between the outer surface of the insertion section 87A and the inner surface of the insertion passage hole 85A. This sealing member 91A is inserted into the insertion passage hole 85A together with the insertion section 87A, in a state of having been pre-engaged with the insertion section 87A.

The parts attaching section 82A has a positioning section 93A which is surrounded by wall section 92A and is formed on the bottom section 73A, and a screw hole 94A formed in this positioning section 93A.

The power transistor 44A is positioned in the housing 20A by being mounted inside the positioning section 93A. In this positioned state, by screwing an attaching screw 95 into the screw hole 94A through the power transistor 44A, the power transistor 44A is attached so that it directly contacts with the bottom section 42A of the housing 20A which is the outer wall of the throttle body base 15A (in other words, is directly attached). As shown in FIG. 13, a plurality of connection pins 97A (specifically at three places) which extend in this attached state to the opening section 71A side, that is, the side opposite to the throttle body base 15A, are formed on the power transistor 44A. The parts attaching section 82A is arranged on the upstream side of the throttle valve 24A in the direction of extension of the intake passage 16A. As a result, the power transistor 44A is also arranged on the upstream side of the throttle valve 24A in the direction of extension of the intake passage 16A.

Electric parts 102A, external connection wiring 103A, and so forth, are pre-mounted on the circuit board 45A. A guide hole 98A for insertion of the insertion pin 75A, and a guide hole 99A for insertion of the insertion pin 80A, are formed in diagonally opposite positions on the rectangular circuit board 45A. As shown in FIG. 14, on the circuit board 45A in the proximity of the one guide hole 98A, connection holes 100A for insertion of the connection pins 89A of the intake air pressure sensor 43A in a condition attached to the housing 20A are formed numbering as many as the number of the connection pins 89A. In the position in the proximity of the other guide hole 99A, connection holes 101A for insertion of the connection pins 97A of the power transistor 44A attached to the housing 20A are formed numbering as many as the number of the connection pins 97A.

When attaching these parts, the intake air pressure sensor 43A in a condition with the sealing member 91A fitted to the insertion section 87A, is attached to the sensor attaching section 77A of the bottom section 42A of the housing 20A, and after the power transistor 44A has been attached to the parts attaching section 82A, the circuit board 45A is attached to the housing 20A. In other words, the circuit board 45A is mounted on both the mounting stands 74A and 79A, inserting the connection pins 89A and 97A of the intake air pressure sensor 43A and the power transistor 44A into the connection holes 100A and 101A of the circuit board 45A, while inserting the insertion pins 75A and 80A of both board attaching sections 76A and 81 A of the housing 20A, into both guide holes 98A and 99A which are diagonally positioned on the circuit board 45A. Next, the connection pins 89A and 97A which project from the circuit board 45A to the opening section 71 A side are connected to the circuit board 45A by means of soldering or the like.

Next, by carrying out resin potting into the housing 20A which is accommodating the circuit board 45A, so as to fill up to the level of the opening section 71A, the circuit board 45A, the intake air pressure sensor 43A, and the power transistor 44A are embedded in the potting resin 47A. As a result, the circuit board 45A, in the state of being mounted on both the mounting stands 74A and 79A, is attached to both the board attaching sections 76A and 81A, and is thus attached to the housing 20A.

According to the present embodiment described above, since the power transistor 44A which is a heat-generating component, is directly attached to the bottom section 42A of the receiving section 20A which is the outer wall of the throttle body base 15A, the metal throttle body base 15A can efficiently radiate the heat of the power transistor 44A, and an additional metal plate is not required. As a result, the heat of the power transistor 44A can be efficiently radiated, and a reduction in the number of parts can be achieved.

In addition, by directly attaching the power transistor 44A which is the heat-generating component, to the bottom section 42A of the receiving section 20A which is the outer wall of the throttle body base 15A, and subsequently inserting the connection pins 89A and 97A extending from the power transistor 44A into the connection holes 100A and 101A, the circuit board 45A can be attached to the throttle body base 15A so that it is arranged on the side of the power transistor 44A opposite to the throttle body base 15A. Therefore, the power transistor 44A can be distanced from the circuit board 45A. Furthermore, the circuit board 44A can be distanced from the mounting position of the power transistor 44A on the throttle body base 15A. As a result, the influence of the heat generated by the power transistor 44A on the circuit board 45A can be reduced, and reliability with respect to heat influence of the parts mounted on the circuit board 45A can be improved.

Furthermore, in the throttle body base 15A, the power transistor 44A which is the heat-generating component, is arranged on the upstream side of the throttle valve 24A in the direction of extension of the intake passage 16A, where the influence of heat from the engine is less likely to be received. Therefore, the heat of the power transistor 44A can be further efficiently radiated by the metal throttle body base 15A.

In addition, by embedding the power transistor 44A which is a heat-generating component in the potting resin 47A, the heat generated by the power transistor 44A can also be absorbed by the potting resin 47A. As a result, the heat of the power transistor 44A can be further efficiently radiated.

Here, a similar effect can also be achieved with respect to other heat-generating components other than the power transistor 44A, such as an IC for a power supply, by similarly applying the mounting structure for a heat-generating component of a throttle body of the present invention.

### INDUSTRIAL APPLICABILITY

According to the mounting structure for an electronic control device for a vehicle of the present invention, even in the case in which the electronic control device for a vehicle is required to be arranged above the cylinder block or above the cylinder head of the engine due to layout restrictions, by arranging the electronic control device for a vehicle above the intake passage, which is arranged above the cylinder block or the cylinder head, the heat rising from the cylinder block or the cylinder head can be shielded by the intake passage and prevented from reaching the electronic control device for a vehicle. Therefore, influence of the heat from the engine can be avoided. Moreover, the heat generated from the electronic control device for a vehicle itself can also be radiated into the intake passage. Furthermore, according to the mounting structure for a heat-generating component of a throttle body of the present invention, since the heat-generating component is directly attached to the throttle body base, the heat of the heat-generating component can be efficiently radiated by the metal throttle body base, and the number of parts can be reduced.

## Claims

1. A mounting structure for an electronic control device (11) for a vehicle, comprising:
a cylinder block (54) or cylinder head (53) of an engine (56);
an intake passage (16) which is connected to the engine (56) and which is arranged above the cylinder block (54) or above the cylinder head (53); and
the electronic control device (11) for a vehicle arranged above the cylinder block (54) or the cylinder head (53), and above the intake passage (16),
**characterized in that**:
the intake passage (16) is formed in a throttle body (12) having a throttle valve (24);
the throttle body (12) is arranged so as to overlap above the cylinder block (54) or the cylinder head (53); and
the electronic control device (11) is arranged above the intake passage (16).

2. A mounting structure for a heat-generating component (44A) of an electronic control device (11A) of a throttle body (12A), the mounting structure comprising:
the throttle body (12A) which has a throttle valve (24A), and a metal throttle body base (15A) formed with an intake passage (16A) in which the throttle valve (24A) is arranged,
**characterized in that** the heat-generating component (44A) is directly attached to an outer wall of the throttle body base (15A).

3. The mounting structure for a heat-generating component (44A)of an electronic control device (11A) of a throttle body (12A) according to claim 2, wherein connection pins (89A) are extended from the heat-generating component (44A) on the opposite side to the throttle body base (15A), and a circuit board (45A) having connection holes (100A) for insertion of the connection pins (89A) is arranged on the side of the heat-generating component (44A) opposite to the throttle body base (15A).

4. The mounting structure for a heat-generating component (44A) of an electronic control device (11A) of a throttle body (12A) according to claim 2, wherein the heat-generating component (44A) is arranged on the upstream side of the throttle valve (24A) in a direction of extension of the intake passage (16A).

5. The mounting structure for a heat-generating component (44A) of an electronic control device (11A) of a throttle body (12A) according to claim 2, wherein the heat-generating component (44A) is embedded in potting resin (47A).

## Patentansprüche

1. Befestigungsanordnung für ein elektronisches Steuergerät (11) für ein Fahrzeug, enthaltend:
einen Zylinderblock (54) oder Zylinderkopf (53) einer Maschine (56);
einen Einlass-Durchlass (16) der mit der Maschine (56) verbunden ist und oberhalb des Zylinderblocks (54) oder oberhalb des Zylinderkopfes (53) angeordnet ist; und
das elektronische Steuergerät (11) für ein Fahrzeug, das oberhalb des Zylinderblocks (54) oder oberhalb des Zylinderkopfes (53) und oberhalb des Einlass-Durchlasses (16) angeordnet ist,
**dadurch gekennzeichnet, dass**:
der Einlass-Durchlass (16) in einem Drosselklappengehäuse (12) ausgebildet ist, das eine Drosselklappe (24) aufweist;
das Drosselklappengehäuse (12) derart angeordnet ist, dass es den Zylinderblock (54) oder den Zylinderkopf (53) oberhalb überdeckt; und
das elektronische Steuergerät (11) oberhalb des Einlass-Durchlasses (16) angeordnet ist.

2. Befestigungsanordnung für ein wärmeerzeugendes Bauteil (44A) eines elektronischen Steuergeräts (11A) eines Drosselklappengehäuses (12A), wobei die Befestigungsanordnung enthält:
das Drosselklappengehäuse (12A), das eine Drosselklappe (24A) aufweist, und eine metallische Drosselklappengehäuse-Basis (15A), die mit einem Einlass-Durchlass (16A) ausgebildet ist, in dem die Drosselklappe (24A) angeordnet ist,
**dadurch gekennzeichnet, dass** das wärmeerzeugende Bauteil (44A) direkt an einer äußeren Wand der Drosselklappengehäuse-Basis (15A) angebracht ist.

3. Befestigungsanordnung für ein wärmeerzeugendes Bauteil (44A) eines elektronischen Steuergeräts (11A) eines Drosselklappengehäuses (12A) nach Anspruch 2, wobei sich Verbindungsstifte (89A) von dem wärmeerzeugenden Bauteil (44A) an der gegenüberliegenden Seite zu der Drosselklappengehäuse-Basis (15A) erstrecken, und wobei eine Leiterplatte (45A), die Verbindungslöcher (100A) zum Einführen der Verbindungsstifte (89A) aufweist, auf der der Drosselklappengehäuse-Basis (15A) gegenüberliegenden Seite des wärmeerzeugenden Bauteils (44A) angeordnet ist.

4. Befestigungsanordnung für ein wärmeerzeugendes Bauteil (44A) eines elektronischen Steuergeräts (11A) eines Drosselklappengehäuses (12A) nach Anspruch 2, wobei das wärmeerzeugende Bauteil (44A) auf der stromaufwärts liegenden Seite der Drosselklappe (24A) in einer Richtung der Ausdehnung des Einlass-Durchlasses (16A) liegt.

5. Befestigungsanordnung für ein wärmeerzeugendes Bauteil (44A) eines elektronischen Steuergeräts (11A) eines Drosselklappengehäuses (12A) nach Anspruch 2, wobei das wärmeerzeugende Bauteil (44A) in Vergussharz (47A) eingebettet ist.

## Revendications

1. Structure de montage d'un dispositif (11) électronique de commande pour un véhicule, comprenant :
un bloc cylindres (54) ou une culasse (53) d'un moteur (56) ;
un conduit (16) d'admission, qui communique avec le moteur (56) et qui est disposé au-dessus du bloc cylindres (54) ou au-dessus de la culasse (53) ; et
le dispositif (11) électronique de commande pour un véhicule est disposé au-dessus du bloc cylindres (54) ou de la culasse (53) et au-dessus du conduit (16) d'admission,
**caractérisée en ce que** :
le conduit (16) d'admission est formé dans un corps (12) de papillon ayant une vanne (24) à papillon ;
le corps (12) de papillon est monté de manière à chevaucher le bloc cylindres (54) ou la culasse (53) ; et
le dispositif (11) électronique de commande est monté au-dessus du conduit (16) d'admission.

2. structure de montage d'un composant (44A) produisant de la chaleur d'un dispositif (11A) électronique de commande d'un corps (12A) de papillon, la structure de montage comprenant :
le corps (12A) de papillon qui a une vanne (24A) à papillon et une base (15A) métallique de corps de papillon formée en ayant un conduit (16A) d'admission dans lequel la vanne (24A) à papillon est montée,
**caractérisée en ce que** le composant (44A) produisant de la chaleur est fixé directement à une paroi extérieure de la base (15A) du corps de papillon.

3. Structure de montage d'un composant (44A) produisant de la chaleur d'un dispositif (11A) électronique de commande d'un corps (12A) de papillon suivant la revendication 2, dans laquelle des broches (89A) de connexion partent du composant (44A) produisant de la chaleur du côté opposé à la base (15A) du corps de papillon et une plaquette (45A) de circuit ayant des trous (100A) de connexion pour l'insertion des broches (89A) de connexion est montée du côté du composant (44A) produisant de la chaleur opposé à la base (15A) du corps de papillon.

4. Structure de montage d'un composant (44A) produisant de la chaleur d'un dispositif (11A) électronique de commande d'un corps (12A) de papillon suivant la revendication 2, dans laquelle le composant (44A) produisant de la chaleur est monté du côté amont de la vanne (24A) à papillon dans une direction dans laquelle s'étend le conduit (16A) d'admission.

5. Structure de montage d'un composant (44A) produisant de la chaleur d'un dispositif (11A) électronique de commande d'un corps (12A) de papillon suivant la revendication 2, dans laquelle le composant (44A) produisant de la chaleur est incorporé dans une résine (47A) d'empotage.
